**Europäisches Patentamt**

**European Patent Office**

**Office européen des brevets**

(11) Publication number:

**0 346 590**
**A1**

## (12) EUROPEAN PATENT APPLICATION

(21) Application number: **89106882.7**

(51) Int. Cl.⁴: **A47J 43/12**

(22) Date of filing: **18.04.89**

The title of the invention has been amended (Guidelines for Examination in the EPO, A-III, 7.3).

(30) Priority: **18.04.88 IT 4571888**

(43) Date of publication of application:
**20.12.89 Bulletin 89/51**

(84) Designated Contracting States:
**AT BE CH DE ES FR GB GR IT LI LU NL SE**

(71) Applicant: **Polo Tacchia, Ermes**
**Via G.R. Carli 2**
**I-33081 Aviano (Pordenone)(IT)**

(72) Inventor: **Polo Tacchia, Ermes**
**Via G.R. Carli 2**
**I-33081 Aviano (Pordenone)(IT)**

(74) Representative: **Patentanwälte Grünecker,**
**Kinkeldey, Stockmair & Partner**
**Maximilianstrasse 58**
**D-8000 München 22(DE)**

(54) **Apparatus for the instantaneous preparation of whipped cream.**

(57) An apparatus of the type defined above is provided with a refrigerating device for the refrigeration of the cream. A pump disposed within the refrigerated compartment of the apparatus is operable in a controlled manner to simultaneously aspirate liquid cream from a respective container and air from the interior of the compartment, and to supply the thus formed mixture to a mixer device which supplies the finished whipped cream to a selectively openable dispenser of the apparatus. The mixing operation resulting in the finished whipped cream may be explained by the continuous subdivision, expansion and agitation of the mixture, resulting in the gaseous phase, namely, air, of the mixture supplied to the mixer device being dispersed in the liquid phase, namely, cream, with a considerable increase of the volume of the latter. The stability of this mixture, which is dispensed as whipped cream, is due to the formation of a protective pellicle of the protein contained in the liquid phase about each bubble of the gaseous phase dispersed therein. An apparatus of the type described above is generally known and will be understood by those skilled in the art without any further detailed description. According to the invention, an apparatus of this type is provided with oscillating agitator means projecting into the liquid cream to act as a level sensor and operable to homogenize the temperature and the composition of the cream to thereby ensure its preservation and improve the quality of the dispensed product.

Fig.1

# APPARATUS FOR THE INSTANTANEOUS PREPARATION OF WHIPPED CREAM, INCLUDING OSCILLATING AGITATOR MEANS FOR MAINTAINING THE QUALITY AND CONTROLLING THE LEVEL OF THE LIQUID CREAM

In known apparatus for the instantaneous preparation of whipped cream, the settling of the liquid cream preserved therein is an unacceptable shortcoming and amy result in the separation of the fatty and aquaeous phases. The coagulation of the fatty phase results in a degradation of the product to be preserved, and in an undesirable change of the composition of the remaining phase of the liquid cream. There is the additional problem of uneven temperature distribution in the mass of the liquid cream to be preserved. According to the invention there is provided a motor-operated oscillating device for continuously agitating the liquid cream preserved in the refrigerated compartment of the apparatus. The device for agitating the liquid cream may for instance comprise a paddle mounted on a horizontal axis for oscillating thereabout by the action of motor means. The agitator device it at least partially immersed in the liquid cream and thus causes a continuous agitation of the entire liquid mass, to thereby prevent the settling of the cream and the separation of its fatty components, so that the preserved product maintains its original freshness and homogenous composition over an extended time. The temperature required for safe preservation is rapidly attained and remains substantially constant throughout the mass of the thus agitated liquid cream. The paddle is preferably of an electrically cunductive material to act as a probe for controlling the level of the liquid cream in the cream container of the refrigerated compartment of the apparatus. This control operation is based on the electric conductivity of the liquid cream itself: when the paddle fails to come into contact with the liquid cream in the container, an externally perceivable signal is generated to advise the operator of the necessity of replenishing the liquid cream supply. Excepting the short periods required for replenishing the cream supply, the refrigerated compartment of the apparatus remains constantly closed. The preserved product is thus protected from light and prevented from exchanging heat with the environment outside the compartment. The whipped cream dispensed from the apparatus constantly shows the desired quality without requiring any intervention on the part of the operator apart from replenishing the liquid cream supply.

The continuous agitation of the liquid cream and the automatic control of its level during operation of the cream-whipping apparatus confer a maximum degree of freedom to its operator.

Further characteristics and advantages of the invention will become more clearly evident from the following description, given by way of example with reference to the accompanying drawings, wherein:

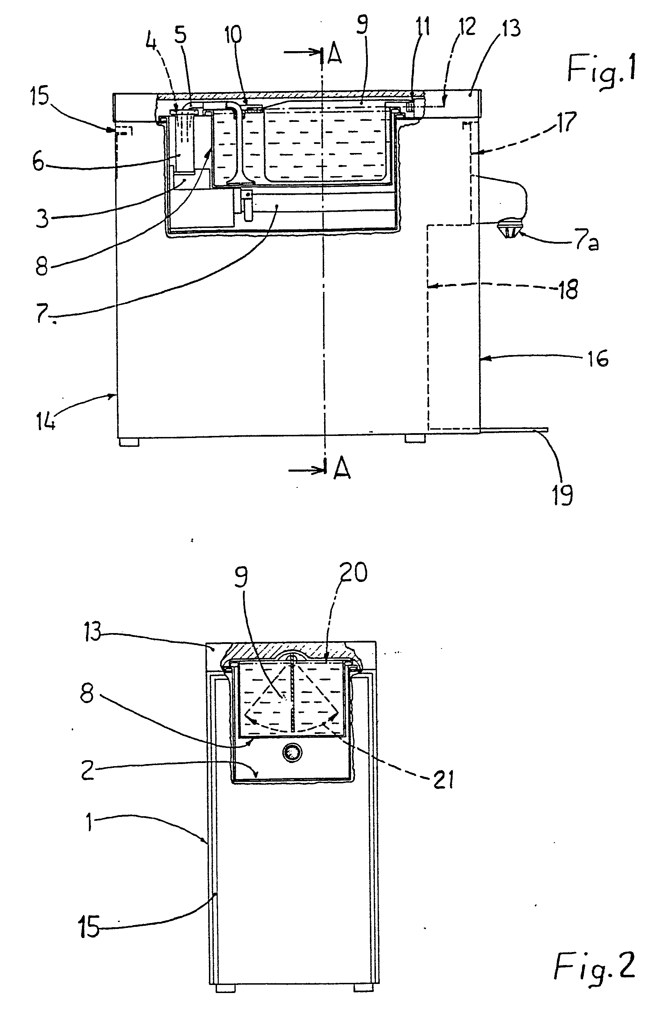

fig. 1 shows a partially sectioned sideview of the apparatus according to the invention, and

fig. 2 shows a cross-sectional view of the apparatus taken along the line A-A in fig. 1.

With reference to the drawings, the apparatus comprises a housing 1 accommodating a refrigerating assembly with a respective refrigerated compartment 2, a motor-driven pump 3 with air and liquid inlet ports 4 and 5, respectively, passing through a liquid intake control device 6, a mixer device 7 including a selectively openable dispenser 7a, and a removable container 8 for the liquid cream. An oscillating agitator device 9 is suspended in container 8 between a mounting support 10 and a sealed bearing 11 for oscillation about a horizontal axis 12 by the action of a motor (not shown). The refrigerated cell 2 is closed by a lid 13 hinged to housing 1 about a horizontal axis. The rear wall 14 of housing 1 is provided adjacent its boundary with air inlets 15 for the supply of cooling air to the various motors, the compressor and the condenser of the refrigerating circuit. The front wall 16 of housing carries an instrument panel 17 and the dispenser 7a at its top portion and has its lower portion formed with a reentrant wall portion 18 cooperating with a drain bottom 19 to reduce excessive splashing of the dispensed product. The invention is particularly directed to an apparatus of the type described provided with the oscillating homogenizing device 9 simultaneouls acting as a level control sensor. In the embodiment shown in the drawings, this device 9 comprises a paddle or the like which is at least partially immersed in the liquid cream 20 in the container 8, so that its oscillation causes the mass of liquid cream to be thoroughly agitated from the center towards the walls of the container, and from the bottom to the top as indicated by arrows 21, and along all of the inner wall surfaces of container 8. The heat exchange between the entire mass 20 of the liquid cream and the interior of refrigerated compartment 2 through the walls of container 8 is considerably more effective than in the case of a stagnant mass of liquid cream, so that the desired preservation temperature is rapidly attained throught the mass of the cream. The preservation temperature may closely approach 0 °C without the danger of ice formation. The agitator device also prevents settling of the liquid cream and the separation of its fatty components. In this manner the liquid cream retains its homogenous composition and even temperature distribution throughout, permitting the apparatus to be effectively and economically operated, even when the whipped cream is to be dispensed at widely varying intervals.

## Claims

1. Apparatus for the instantaneous preparation of whipped cream, comprising a housing enclosing a refrigerating unit with an associated refrigerated compartment for the preservation of the liquid cream, a motor-operated pump including control means for forming and supplying a mixture of air and liquid cream, a mixing device provided with a selectively openable dispenser, and an electrically conductive liquid cream level sensing device, characterized in that the apparatus is provided with an oscillating agitator device (9) at least partially immersed in the liquid cream (20) preserved in the refrigerated compartment (2) of the apparatus, said device acting as said liquid cream level sensing device.

Fig.1

Fig.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4 ) |
|---|---|---|---|
| A | US-A-1404745 (DONAUER) <br> * the whole document * <br> --- | 1 | A47J 43/12 |
| A | DE-U-6948368 (KUMMERLING) <br> * page 8, line 12 - page 10, line 10; figures 1-4 * <br> --- | 1 | |
| A | DE-U-1682132 (ROTHS MOLKEREIMASCHINENFABRIK) <br> * the whole document * <br> --- | 1 | |
| A | FR-A-1439745 (BERGBOM & CO) <br> * the whole document * <br> --- | 1 | |
| A | EP-A-208927 (KUMMERLING) <br> ----- | | |
| | | | TECHNICAL FIELDS SEARCHED (Int. Cl.4 ) <br><br> A47J <br> A01J <br> B01F <br> G01F <br> A23G |

The present search report has been drawn up for all claims

| Place of search | Date of completion of the search | Examiner |
|---|---|---|
| THE HAGUE | 10 JULY 1989 | MEINDERS H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)